# EUROPEAN PATENT APPLICATION

(11) **EP 4 365 138 A1**
(43) Date of publication of application: **08.05.2024**
(21) Application number: 22859805.8
(22) Date of filing: 09.02.2022
(51) Int. Cl.: C01G 53/00, C01G 51/00, H01M 4/36, H01M 4/485, H01M 4/505, H01M 4/525, H01M 4/62, H01M 10/052

(54) **QUATERNARY POSITIVE ELECTRODE MATERIAL AND PREPARATION METHOD THEREFOR AND APPLICATION THEREOF**

(30) Priority: 26.08.2021 CN 202110985698
(71) Applicant: SVOLT ENERGY TECHNOLOGY CO., LTD, Changzhou, Jiangsu 213200 (CN)
(72) Inventor: WANG, Zhuang, hangzhou, Jiangsu 213200 (CN); ZHANG, Shutao, hangzhou, Jiangsu 213200 (CN); LI, Zitan, hangzhou, Jiangsu 213200 (CN); WANG, Yazhou, hangzhou, Jiangsu 213200 (CN); BAI, Yan, hangzhou, Jiangsu 213200 (CN); MA, Jiali, hangzhou, Jiangsu 213200 (CN); YANG, Hongxin, hangzhou, Jiangsu 213200 (CN)
(74) Representative: Groth & Co. KB
(86) International application number: PCT/CN2022/075706
(87) International publication number: WO 2023/024446

(57) **Abstract**

The present application relates to the technical field of lithium batteries, and in particular, to a quaternary positive electrode material and a preparation method therefor and an application thereof. The preparation method for the quaternary positive electrode material comprises the following steps: mixing a positive electrode base material, a soluble cobalt salt, a precipitant, a complexing agent, and water, performing liquid-solid separation on a mixed system, collecting a solid phase, and drying and calcining, the chemical general formula of the positive electrode base material being LiNiₓCo_{y}Mn_{z}Al_{(1-x-y-z)}O₂, wherein 0.9≤x<1, 0<y<0.07, and 0<z<0.03. According to the present application, the positive electrode base material is washed and coated, and the surface of the positive electrode base material is uniformly coated with a layer of cobalt compound, such that the conductivity of the material is improved, the function of a protective layer is realized, and side reaction of the positive electrode material and an electrolyte is reduced; and meanwhile, a residual lithium source can be settled by means of the precipitant, such that the capacity exertion and the circulation retention rate of the positive electrode material are affected due to the fact that a jelly-like situation is prevented from occurring due to too high pH value in the later homogenization process.

## Description

### CROSS REFERENCE TO RELATED APPLICATIONS

The present disclosure claims priority to Chinese Patent Application No. 2021109856987, entitled "Quaternary Positive Electrode Material and Preparation Method Therefor and Application Thereof, filed on August 26, 2021 to China National Intellectual Property Administration and incorporated by reference in its entirety.

### TECHNICAL FIELD

The present disclosure relates to the technical field of lithium batteries, in particular to a quaternary positive electrode material and a preparation method therefor and application thereof.

### BACKGROUND

Lithium-ion batteries have become the most widely used electrochemical power source at present, and the most representative of this kind of battery is a lithium secondary battery (LIB) that generates electricity due to the change of chemical potential of lithium ions in positive and negative electrodes during intercalation and deintercalation. Positive electrode materials play a direct leading role in the performance of LIBs, so a lot of researchers are working to achieve positive electrode materials with a large capacity, a fast charging/discharging speed, and a long cycle life that can be reversibly embedded and deintercalated by lithium-ions. Currently, high-nickel materials are considered to be one of the most promising candidates because they can increase the specific capacity of the lithium-ion batteries by increasing nickel content. However, the resulting poor cycling stability of the lithium-ion batteries may hinder the success of this approach.

In addition, a quaternary polycrystalline material in the high-nickel material has more advantages in safety and cycle stability than a ternary positive electrode material, and is one of the most promising materials at present. However, a washing process is the main way of the high-nickel quaternary positive electrode material to reduce residual alkali at present, after washing, lithium residue is removed, and because lithium ions in a crystal lattice have a greater concentration difference with lithium ions outside the crystal lattice, the material is more inclined to delithium reaction without electron transfer and then more inclined to the transition of Ni³⁺/Ni²⁺ the transition, a surface of the washed material is rough, a specific surface area becomes larger, a contact area with electrolyte is larger, and side reactions are greater. In order to solve this problem, the commonly used modification method is material surface coating, but for high-nickel quaternary positive electrode materials, dry mix coating will lead to uneven surface coating of the material, and a step process is added, which increases the production cost.

In view of this, the present application is hereby proposed.

### SUMMARY OF THE INVENTION

The present disclosure provides a method for preparing a quaternary positive electrode material, including the following steps:
mixing a positive electrode base material, a soluble cobalt salt, a precipitant, a complexing agent, and water, performing liquid-solid separation on a system after mixing, collecting a solid phase, and performing drying and calcining.

A chemical general formula of the positive electrode base material is LiNiₓCo_{y}Mn_{z}Al_{(1-x-y-z)}O₂, wherein 0.9≤x<1 , 0<y<0.07, and 0<z<0.03.

In some implementations, the complexing agent includes NH3·H2O and/or ammonium chloride.

In some implementations, the precipitant includes ammonium bicarbonate.

In some implementations, the soluble cobalt salt includes at least one of cobalt sulfate, cobalt nitrate or cobalt chloride.

In some implementations, a mass ratio of the positive electrode base material, the soluble cobalt salt, the precipitant, and the complexing agent is 1:(0.006-0.012):(0.004-0.006):(0.15-0.25).

In some implementations, the mixing specifically includes the following steps: adding dropwise a soluble cobalt salt solution to a first mixture of the positive electrode base material and a complexing agent solution to obtain a second mixture; and adding dropwise a precipitant solution to the second mixture.

In some implementations, the precipitant solution has a concentration of 4-6 mol/L.

In some implementations, the soluble cobalt salt solution has a concentration of 1-3 mol/L.

In some implementations, stirring is performed during the mixing, and the stirring is performed at a rotational speed of 100-300 r/min for 10-20 min.

In some implementations, the drying is performed at a temperature of 80-150°C for 5-15h.

In some implementations, the calcining performed at a temperature of 300-500°C for 7-9h.

In some implementations, a process for preparing the positive electrode base material includes the following step:
performing a calcining treatment on a mixture of a nickel-cobalt-manganese-aluminum hydroxide and a lithium source; wherein
a molar ratio of the lithium source to the nickel-cobalt-manganese-aluminum hydroxide calculated is (1-1.05):1 in terms of lithium elements to mixed metal elements, the mixed metal elements are nickel element, cobalt element, manganese element, and aluminum element, and in the nickel-cobalt-manganese-aluminum hydroxide, a molar ratio of nickel element, cobalt element, manganese element and aluminum element is (89-91):(6.8-7.1):(1.8-2.1):1.

In some implementations, the calcining treatment is performed at a temperature of 650-800°C for 7-9h.

In some implementations, the calcining treatment is performed in an atmosphere containing oxygen.

A quaternary positive electrode material is obtained by the method for preparing the quaternary positive electrode material.

A positive electrode for lithium batteries includes the quaternary positive electrode material.

A lithium battery includes the positive electrode of the lithium battery.

### BRIEF DESCRIPTION OF THE DRAWINGS

In order to more clearly illustrate the technical scheme of the implementations of the present disclosure, the accompanying drawings that need to be used in the implementations will be briefly introduced below. It should be understood that the following accompanying drawings merely illustrate the implementations of the present disclosure, and the size proportions in the accompanying drawings do not directly correspond to the true proportions of the implementations. Meanwhile, the following accompanying drawings merely show some implementations of the present disclosure and should not be regarded as limiting the scope.
FIG. 1 is a curve graph of initial charge and discharge of a positive electrode material in example 1.
FIG. 2 is a curve graph of initial charge and discharge of a positive electrode material in comparative example 1.

### DETAILED DESCRIPTION

The merits of embodiments in the summary of the invention will be set forth in the embodiments in the description below, and some of them may be obvious according to the description, or they may be obtained through a part of the embodiments of the present disclosure.

The technical solution of the present disclosure will be further described below with reference to the accompanying drawings and through some embodiments.

In order to make the objectives, technical solution and advantages of the present disclosure clearer, the present disclosure is further described in detail below with reference to the accompanying drawings and embodiments. It should be understood that the embodiments described here are only used to explain the present disclosure and are not intended to limit the present disclosure. In addition, the technical features involved in the embodiments of the present disclosure described below may be combined with each other as long as they do not conflict with each other. On the premise of not departing from the principles of the embodiments of the present disclosure, a number of improvements and modifications may also be made, and these improvements and modifications shall also be regarded as the scope of protection of the embodiments of the present disclosure.

In one aspect, the present application provides a method for preparing a quaternary positive electrode material, including the following steps:
a positive electrode base material, a soluble cobalt salt, a precipitant, a complexing agent, and water are mixed, liquid-solid separation is performed on a system after the mixing, a solid phase is collected, and drying and calcining are performed.

A chemical general formula of the positive electrode base material is LiNiₓCo_{y}Mn_{z}Al_{(1-x-y-z)}O₂, wherein 0.9≤x<1 , 0<y<0.07, and 0<z<0.03.

According to the present application, the soluble cobalt salt, the precipitant, the complexing agent, the water and the positive electrode base material are mixed, the positive electrode base material is washed and coated, and a layer of a cobalt compound is evenly coated on a surface of the positive electrode base material, which may not only improve an electrical conductivity of the material but also serve as a protective layer reducing a side reaction between a positive electrode material and an electrolyte. In addition, an ammonium bicarbonate solution is added to settle a residual lithium source, preventing the situation that a capacity exertion and circulation retention rate of the positive electrode material are affected due to a jelly-like status caused by an excessively high pH value in a subsequent homogenization process. A preparation process adopted by the present application is simple and short in cycle, and composition is easy.

In some implementations, a value of x includes but is not limited to 0.9, 0.91, 0.92, 0.93, 0.94, 0.95, 0.96, 0.97, 0.98, or 0.99. In some implementations, a value of y includes but is not limited to 0.01, 0.02, 0.03, 0.04, 0.05, 0.06 or 0.065. In some implementations, a value of z includes but is not limited to 0.01, 0.02 or 0.025.

In some implementations, a chemical formula of the positive electrode base material includes LiNi_{0.91}Co_{0.06}Mn_{0.02}Al_{0.01}O₂, LiNi_{0.93}Co_{0.03}Mn_{0.01}Al_{0.03}O₂, LiNi_{0.95}Co_{0.03}Mn_{0.01}Al_{0.01}O₂, LiNi_{0.98}Co_{0.01}Mn_{0.005}Al_{0.05}O₂, etc.

In some implementations, the complexing agent includes NH₃·H₂O and/or ammonium chloride.

In some implementations, the precipitant includes ammonium bicarbonate.

In some implementations, the soluble cobalt salt includes at least one of cobalt sulfate, cobalt nitrate or cobalt chloride. In some implementations, the soluble cobalt salt includes cobalt sulfate, cobalt nitrate or cobalt chloride, or a combination of cobalt sulfate and cobalt nitrate, a combination of cobalt nitrate and cobalt chloride, and a combination of cobalt sulfate, cobalt nitrate and cobalt chloride.

The present application adopts a suitable precipitant to match the complexing agent, the residual lithium source is easily settled, and a proper quantity of the cobalt compound is coated more evenly, thus significantly improving electrochemical properties (having both a relatively high initial effect and cycling performance) and safety performance of a battery obtained through preparation of the quaternary positive electrode material.

In some implementations, a mass ratio of the positive electrode base material, the soluble cobalt salt, the precipitant, and the complexing agent is 1:(0.006-0.012):(0.004-0.006):(0.15-0.25).

In some implementations, the mass ratio of the positive electrode base material, the soluble cobalt salt, the precipitant, and the complexing agent includes but is not limited to 1:0.006:0.004:0.15, 1:0.007:0.0045:0.17, 1:0.008:0.005:0.19, 1:0.009:0.005:0.2, 1:0.01:0.005:0.21, 1:0.12:0.006:0.25, 1:0.006:0.005:0.16, 1:0.007:0.006:0.2 or 1:0.008:0.006:0.22.

By limiting the proper ratio of the positive electrode base material, the soluble cobalt salt, the precipitant, and the complexing agent, the surface of the positive electrode base material may be evenly coated with the cobalt compound, and the residual lithium source may be effectively settled. The quaternary positive electrode material with excellent initial effect and cycling performance is further obtained.

In some implementations, the mixing specifically includes the following steps: a soluble cobalt salt solution is added dropwise to a first mixture of the positive electrode base material and a complexing agent solution to obtain a second mixture; and a precipitant solution is added dropwise to the second mixture.

The present application further limits a sequence of adding the positive electrode base material, the complexing agent solution, the soluble cobalt salt solution and the precipitant solution; and the quaternary positive electrode material with high initial effect, good cycling performance, and excellent safety performance may be further obtained through the above mixing sequence.

In some implementations, the precipitant solution has a concentration of 4-6 mol/L.

In some implementations, the precipitant solution has the concentration including but not limited to 4.1mol/L, 4.2mol/L, 4.3mol/L, 4.4mol/L, 4.5mol/L, 4.6mol/L, 4.7mol/L, 4.8mol/L, 4.9mol/L, 5mol/L, 5.1mol/L, 5.2mol/L, 5.3mol/L, 5.4mol/L, 5.5mol/L, 5.6mol/L, 5.7mol/L, 5.8mol/L or 5.9mol/L.

In some implementations, the soluble cobalt salt solution has a concentration of 1-3 mol/L.

In some implementations, the soluble cobalt salt solution has the concentration including but not limited to 1.1mol/L, 1.2mol/L, 1.3mol/L, 1.4mol/L, 1.5mol/L, 1.6mol/L, 1.7mol/L, 1.8mol/L, 1.9mol/L, 2mol/L, 2.1mol/L, 2.2mol/L, 2.3mol/L, 2.4mol/L, 2.5mol/L, 2.6mol/L, 2.7mol/L, 2.8mol/L or 2.9mol/L.

In some implementations, stirring is performed during the mixing, and the stirring is at a rotational speed of 100-300 r/min for 10-20 min.

In some implementations, the rotational speed of the stirring includes but is not limited to 110r/min, 120r/min, 130r/min, 140r/min, 140r/min, 150r/min, 160r/min, 170r/min, 180r/min, 190r/min, 200r/min, 210r/min, 220r/min, 230r/min, 240r/min, 250r/min, 260r/min, 270r/min, 280r/min, 290r/min, 295r/min or 300r/min.

In some implementations, a duration of the stirring includes but is not limited to 11min, 11.5min, 12min, 12.5min, 13min, 13.5min, 14min, 15min, 16min, 17min, 18min, 19min or 20min.

According to the present application, by adopting a proper range of rotational speed and duration of the stirring, raw materials are mixed more evenly, thus facilitating a reaction course. A more even layer of cobalt compound is further formed, which is conducive to improving the electrochemical properties of the quaternary positive electrode material.

In some implementations, the drying is performed at a temperature of 80-150°C for 5-15h.

In some implementations, the temperature for the drying includes but is not limited to 82°C, 85°C, 87°C, 90°C, 92°C, 95°C, 97°C, 100°C, 102°C, 105°C, 107°C, 109°C, 110°C, 112°C, 115°C, 117°C, 120°C, 122°C, 125°C, 127°C, 130°C, 135°C, 140°C, 142°C, 145°C, 147°C or 149°C.

In some implementations, a drying duration includes but is not limited to 5.5h, 6h, 6.5h, 7h, 7.5h, 8h, 8.5h, 9h, 9.5h, 10h, 10.5h, 11h, 11.5h, 12h, 12.5h, 13h, 13.5h, 14h or 14.5h.

A proper drying duration may not only ensure a drying effect, but also guarantee that a performance of the obtained positive electrode material is not affected.

In some implementations, calcining is performed at a temperature of 300-500°C for 7-9h.

In some implementations, the temperature for the calcining includes but is not limited to 310°C, 320°C, 330°C, 340°C, 350°C, 360°C, 370°C, 380°C, 390°C, 400°C, 410°C, 420°C, 430°C, 440°C, 450°C, 460°C, 470°C, 480°C or 490°C.

In some implementations, a calcining duration includes but is not limited to 7.1h, 7.2h, 7.3h, 7.4h, 7.5h, 7.6h, 7.7h, 7.8h, 7.9h, 8h, 8.1h, 8.2h, 8.3h, 8.4h, 8.5h, 8.6h, 8.7h, 8.8h or 8.9h.

By adopting a proper range of temperature and duration for the calcining, the cycling performance and initial effect of the obtained positive electrode material are improved.

In some implementations, a method for preparing the positive electrode base material includes the following step:
a calcining treatment is performed on a mixture of a nickel-cobalt-manganese-aluminum hydroxide and a lithium source.

A molar ratio of the lithium source to the nickel-cobalt-manganese-aluminum hydroxide is (1-1.05):1 in terms of lithium element to mixed metal elements, the mixed metal elements include nickel element, cobalt element, manganese element, and aluminum element, and in the nickel-cobalt-manganese-aluminum hydroxide, a molar ratio of nickel element, cobalt element, manganese element, and aluminum element is (89-91):(6.8-7.1):(1.8-2.1):1.

In one implementation, the molar ratio of the lithium source to the nickel-cobalt-manganese-aluminum hydroxide is (1-1.05):1 in terms of lithium element to mixed metal elements, and may be 1:1, 1.01:1, 1.02:1, 1.03:1 or 1.04:1.

In one implementation, in the nickel-cobalt-manganese-aluminum hydroxide, the molar ratio of nickel element, cobalt element, manganese element, and aluminum element is 90:7:2: 1, 89:6.8: 1.8: 1, 89.5:6.9: 1.95: 1, 90.5:7:2: 1 or 91:7.1:2.1: 1.

In some implementations, the calcining treatment is performed at a temperature of 650-800°C for 7-9h.

In one implementation, the temperature of the calcining treatment is 650-800°C, and may be 660°C, 670°C, 680°C, 690°C, 700°C, 710°C, 720°C, 730°C, 740°C, 750°C, 760°C, 770°C, 780°C or 790°C.

In one implementation, a duration of the calcining treatment is 7-9h, and may be 7.1h, 7.2h, 7.3h, 7.4h, 7.5h, 7.6h, 7.7h, 7.8h, 7.9h, 8h, 8.1h, 8.2h, 8.3h, 8.4h, 8.5h, 8.6h, 8.7h, 8.8h or 8.9h.

In some implementations, the calcining treatment is performed in an atmosphere containing oxygen.

In one implementation, the method for preparing the positive electrode base material includes the following steps: the nickel-cobalt-manganese-aluminum hydroxide and LiOH are subjected to dry mixing according to a certain molar ratio to obtain a dry mixture, then the dry mixture is calcined at 650-800°C in an atmosphere containing oxygen for 7-9h, and the dry mixture is cooled and screened to obtain the positive electrode base material.

In another aspect, the present application relates to a quaternary positive electrode material obtained by the above method for preparing the quaternary positive electrode material.

The positive electrode material of the present application has excellent capacity, good initial effect and stable cycling performance.

In another aspect, the present application relates to a positive electrode of a lithium battery, including the above quaternary positive electrode material.

A method for preparing a positive electrode plate of the lithium battery of the present application includes the following steps:
the quaternary positive electrode material, a carbon black conductive agent, a binder polyvinylidene fluoride (PVDF) and N-methylpyrrolidone (NMP) are evenly mixed to prepare a battery positive electrode slurry. A mass ratio of the quaternary positive electrode material, the carbon black conductive agent, the binder PVDF and NMP is (94-96):(2-3):(2-3):(4-6). The above battery positive electrode slurry is coated on an aluminum foil with a thickness of 20-40 µm, and is subjected to vacuum drying and rolling to form the positive electrode plate.

In one implementation, the mass ratio of the quaternary positive electrode material, the carbon black conductive agent, the binder PVDF and NMP includes but is not limited to 94:2:2, 94.5:2.5:2.5, 95:2:3, 95.5:2.5:2, 96:3:3.

In one implementation, the thickness of the aluminum foil includes but is not limited to 22µm, 25µm, 27µm, 30µm, 32µm, 35µm, 37µm or 39µm.

In another aspect, the present application relates to a lithium battery, including the above positive electrode of the lithium battery.

The lithium battery of the present application includes the above positive electrode plate, a lithium metal negative electrode plate, and an electrolyte. A composition of the electrolyte is: lithium hexafluorophosphate (LiPF6), ethylene carbonate (EC) and dimethyl carbonate (DMC). LiPF6 is 1.15M, and a volume ratio of EC to DMC is 1:1.

The lithium battery of the present application has excellent capacity, good initial effect and stable cycling performance.

### Examples

Typical non-limiting examples of the present disclosure are as follows:

### Example 1

A method for preparing a quaternary positive electrode material, including the following steps:
(a) A nickel-cobalt-manganese-aluminum hydroxide and LiOH are subjected to dry mixing in a mixer, the materials subjected to drying mixing are calcined in a common batch-type furnace at 700°C in an atmosphere containing oxygen for 8h, and the materials are cooled and screened to obtain a positive electrode base material. A molar ratio of the nickel-cobalt-manganese-aluminum hydroxide to LiOH is 1:1.025(Li/Metal(Ni, Co, Mn and Al)=1.025) in terms of metal elements; and in the nickel-cobalt-manganese-aluminum hydroxide, a molar ratio of Ni, Co, Mn and Al is 90:7:2: 1.
(b) The above obtained positive electrode base material, ammonium hydroxide and distilled water are mixed according to a mass ratio of 1:0.2:100, and are stirred at 200r/min for 5 min to obtain a first mixed system; a cobalt sulfate solution is added dropwise to the first mixed system, a mass ratio of the positive electrode base material to cobalt sulfate is 1:0.01, and the materials are stirred at 200r/min for 10 min to obtain a second mixed system; and an ammonium bicarbonate solution is added dropwise to the second mixed system, a mass ratio of the positive electrode base material to ammonium bicarbonate is 1:0.005, and the materials are evenly stirred, subjected to suction filtration, placed in a 100°C vacuum drying oven for 10h, dried and fetched out. The cobalt sulfate solution has a concentration of 2 mol/L; and the ammonium bicarbonate solution has a concentration of 5 mol/L.
(c) Finally, the materials obtained after drying are calcined at 400°C in an atmosphere containing oxygen for 8h, cooled and screened to obtain a coated positive electrode material.

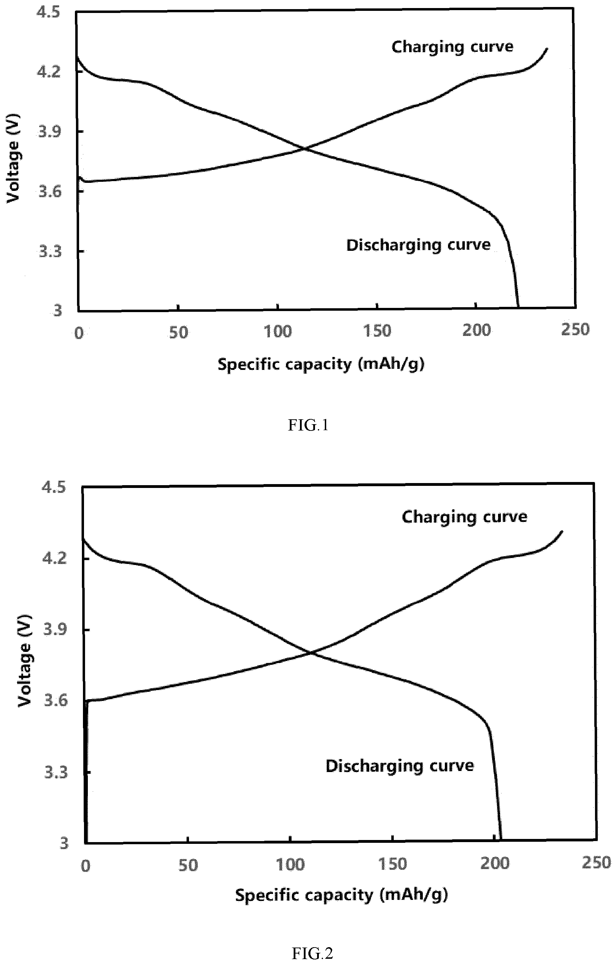

A curve graph of initial charge and discharge of the positive electrode material in example 1 is as shown in FIG. 1.

### Example 2

A method for preparing a quaternary positive electrode material, including the following steps:
(a) A nickel-cobalt-manganese-aluminum hydroxide and LiOH are subjected to dry mixing in a mixer, the materials subjected to drying mixing are calcined in a common batch-type furnace at 700°C in an atmosphere containing oxygen for 8h, and the materials are cooled and screened to obtain a positive electrode base material. A molar ratio of the nickel-cobalt-manganese-aluminum hydroxide to LiOH is 1:1.025(Li/Metal(Ni, Co, Mn and Al)=1.025) in terms of metal elements; and in the nickel-cobalt-manganese-aluminum hydroxide, a molar ratio of Ni, Co, Mn and Al is 90:7:2: 1.
(b) The above obtained positive electrode base material, ammonium hydroxide and distilled water are mixed according to a mass ratio of 1:0.15: 100, and are stirred at 200r/min for 5 min to obtain a first mixed system; a cobalt sulfate solution is added dropwise to the first mixed system, a mass ratio of the positive electrode base material to cobalt sulfate is 1:0.006, and the materials are stirred at 200r/min for 10 min to obtain a second mixed system; and an ammonium bicarbonate solution is added dropwise to the second mixed system, a mass ratio of the positive electrode base material to ammonium bicarbonate is 1:0.004, and the materials are evenly stirred, subjected to suction filtration, placed in a 80°C vacuum drying oven for 15h, dried and fetched out. The cobalt sulfate solution has a concentration of 2 mol/L; and the ammonium bicarbonate solution has a concentration of 5 mol/L.
(c) Finally, the materials obtained after drying are calcined at 300°C in an atmosphere containing oxygen for 9h, cooled and screened to obtain a coated positive electrode material.

### Example 3

A method for preparing a quaternary positive electrode material, including the following steps:
(a) A nickel-cobalt-manganese-aluminum hydroxide and LiOH are subjected to dry mixing in a mixer, the materials subjected to drying mixing are calcined in a common batch-type furnace at 700°C in an atmosphere containing oxygen for 8h, and the materials are cooled and screened to obtain a positive electrode base material. A molar ratio of the nickel-cobalt-manganese-aluminum hydroxide to LiOH respectively calculated by metal elements is 1:1.025(Li/Metal(Ni, Co, Mn and Al)=1.025) in terms of metal elements; and in the nickel-cobalt-manganese-aluminum hydroxide, a molar ratio of Ni, Co, Mn and Al is 90:7:2:1.
(b) The above obtained positive electrode base material, ammonium hydroxide and distilled water are mixed according to a mass ratio of 1:0.25:100, and are stirred at 200r/min for 5 min to obtain a first mixed system; a cobalt sulfate solution is added dropwise to the first mixed system, a mass ratio of the positive electrode base material to cobalt sulfate is 1:0.012, and the materials are stirred at 200r/min for 10 min to obtain a second mixed system; and an ammonium bicarbonate solution is added dropwise to the second mixed system, a mass ratio of the positive electrode base material to ammonium bicarbonate is 1:0.006, and the materials are evenly stirred, subjected to suction filtration, placed in a 150°C vacuum drying oven for 5h, dried and fetched out. The cobalt sulfate solution has a concentration of 2 mol/L; and the ammonium bicarbonate solution has a concentration of 5 mol/L.
(c) Finally, the materials obtained after drying are calcined at 500°C in an atmosphere containing oxygen for 7h, cooled and screened to obtain a coated positive electrode material.

### Example 4

According to a method for preparing a quaternary positive electrode material, except in step (b), the materials are stirred at 300r/min for 5 min to obtain a first mixed system; and the materials are stirred at 100r/min for 15 min to obtain a second mixed system; and
the cobalt sulfate solution has a concentration of 3 mol/L; and the ammonium bicarbonate solution has a concentration of 6 mol/L,
other conditions are the same as example 1.

### Example 5

According to a method for preparing a quaternary positive electrode material, except in step (b), the materials are stirred at 100r/min for 10 min to obtain a first mixed system; and the materials are stirred at 300r/min for 5 min to obtain a second mixed system; the cobalt sulfate solution has a concentration of 1 mol/L; and the ammonium bicarbonate solution has a concentration of 4 mol/L, other conditions are the same as example 1.

### Comparative example 1

A method for preparing a positive electrode material, including the following steps:
(a) Preparation of a positive electrode base material: the same as step (a) in example 1.
(b) The obtained positive electrode base material is mixed with distilled water at a mass ratio of 1:1, and the materials are stirred at 200r/min for 10 min, subjected to suction filtration, placed in a 100°C vacuum drying oven for 10h, dried and fetched out.
(c) The dried materials in (b) are calcined at 400°C in an atmosphere containing oxygen for 8h, cooled and screened to obtain a coated positive electrode material.

A curve graph of initial charge and discharge of the positive electrode material in this comparative example is as shown in FIG. 2.

### Comparative example 2

A method for preparing a positive electrode material, including the following steps:
(a) Preparation of a positive electrode base material: the same as step (a) in example 1.
(b) The obtained positive electrode base material is mixed with distilled water at a mass ratio of 1:1, an ammonium bicarbonate solution is added dropwise to the mixed system, a mass ratio of the positive electrode base material to ammonium bicarbonate is 1:0.006, and the materials are stirred at 200r/min for 10 min, subjected to suction filtration, placed in a 100°C vacuum drying oven for 10h, dried and fetched out. The ammonium bicarbonate solution has a concentration of 5 mol/L.
(c) The dried materials in (b) are calcined at 400°C in an atmosphere containing oxygen for 8h, cooled and screened to obtain a coated positive electrode material.

### Testing method

The positive electrode materials obtained in the examples and the comparative examples are respectively adopted to prepare a button battery. A preparation method includes the following steps:
The positive electrode material, a carbon black conductive agent, a binder PVDF and NMP with a mass ratio of 95:2.5:2.5:5 are evenly mixed to prepare a battery positive electrode slurry, the positive electrode slurry is coated on an aluminum foil with a thickness of 12 µm, and is subjected to vacuum drying and rolling to form a positive electrode plate, a lithium metal plate is used as a negative electrode, a composition of an electrolyte is 1.15M LiPF6, and a volume ratio of EC to DMC is 1: 1; and the button battery is assembled.

An electrical property of the material is tested at 45°C by a blue battery test system, a test voltage range being 3V-4.3V; and a 1-cycle capacity and 50-cycle capacity retention rate are tested.

**Table 1 Electrochemical Properties of Batteries**

| Implementation scheme | Charging specific capacity (mAh/g) | Discharging specific capacity (mAh/g) | Initial effect (%) | 50-cycle retention rate (%) |
|---|---|---|---|---|
| Example 1 | 233.6 | 221.2 | 94.7 | 98.7 |
| Example 2 | 231.4 | 218.6 | 94.4 | 97.6 |
| Example 3 | 232.8 | 219.1 | 94.1 | 96.9 |
| Comparative example 1 | 223.1 | 203.2 | 91.1 | 77.8 |
| Comparative example 2 | 225.6 | 205.4 | 91.0 | 80.2 |

The present application mixes the soluble cobalt salt solution, the precipitant solution, the complexing agent, and the positive electrode base material according to a certain sequence, washes and coats the positive electrode base material, and evenly coats a layer of a cobalt compound on a surface of the positive electrode base material, which may not only improve an electrical conductivity of the material but also serve as a protective layer reducing a side reaction between a positive electrode material and an electrolyte. In addition, the precipitant may settle a residual lithium source, preventing the situation that a capacity exertion and circulation retention rate of the positive electrode material are affected due to a jelly-like status caused by an excessively high pH value in a subsequent homogenization process. It can be seen from Table 1 that, the lithium batteries prepared by the positive electrode material obtained by the method of the embodiments of the present application may have excellent electrochemical properties, while the lithium batteries prepared by the positive electrode material obtained by the method in the comparative example 1 or comparative example 2 have lower charging specific capacity, discharging specific capacity, initial effect, and 50-cycle retention rate than the lithium batteries prepared by the positive electrode material obtained by the method of the embodiments of the present application.

### Industrial applicability

In conclusion, the present disclosure provides a positive electrode material and a preparation method therefor, and a lithium battery. The positive electrode material has excellent structural stability, volume expansion of the positive electrode material can be effectively inhibited, a battery cycling performance can be improved, and the preparation method may reduce the preparation cost.

## Claims

1. A method for preparing a quaternary positive electrode material, comprising the following steps:
mixing a positive electrode base material, a soluble cobalt salt, a precipitant, a complexing agent, and water, performing liquid-solid separation on a system after the mixing, collecting a solid phase, and performing drying and calcining; wherein
a chemical general formula of the positive electrode base material is LiNiₓCo_{y}Mn_{z}Al_{(1-x-y-z)}O₂, wherein 0.9≤x<1 , 0<y<0.07, and 0<z<0.03.

2. The method for preparing a quaternary positive electrode material of claim 1, comprising at least one of the following features (1) to (3):
(1) the complexing agent comprises NH₃·H₂O and/or ammonium chloride;
(2) the precipitant comprises ammonium bicarbonate; and
(3) the soluble cobalt salt comprises at least one of cobalt sulfate, cobalt nitrate and cobalt chloride.

3. The method for preparing a quaternary positive electrode material of claim 1 or 2, wherein a mass ratio of the positive electrode base material, the soluble cobalt salt, the precipitant, and the complexing agent is 1:(0.006-0.012):(0.004-0.006):(0.15-0.25).

4. The method for preparing a quaternary positive electrode material of any one of claims 1 to 3, comprising at least one of the following features (1) to (3):
(1) the mixing specifically comprises the following steps: adding dropwise a soluble cobalt salt solution to a first mixture of the positive electrode base material and a complexing agent solution to obtain a second mixture; and adding dropwise a precipitant solution to the second mixture;
(2) the precipitant solution has a concentration of 4-6 mol/L; and
(3) the soluble cobalt salt solution has a concentration of 1-3 mol/L.

5. The method for preparing a quaternary positive electrode material of any one of claims 1 to 4, wherein a stirring is performed during the mixing, and the stirring is performed at a rotational speed of 100-300 r/min for 10-20 min.

6. The method for preparing a quaternary positive electrode material of any one of claims 1 to 5, wherein the drying is performed at a temperature of 80-150°C for 5-15h.

7. The method for preparing a quaternary positive electrode material of any one of claims 1 to 6, wherein the calcining is performed at a temperature of 300-500°C for 7-9h.

8. The method for preparing a quaternary positive electrode material of any one of claims 1 to 7, wherein a process for preparing the positive electrode base material comprises the following step:
performing a calcining treatment on a mixture of nickel-cobalt-manganese-aluminum hydroxide and a lithium source; wherein
a molar ratio of the lithium source to the nickel-cobalt-manganese-aluminum hydroxide is (1-1.05):1 in terms of lithium element to mixed metal elements, the mixed metal elements are nickel element, cobalt element, manganese element, and aluminum element, and in the nickel-cobalt-manganese-aluminum hydroxide, a molar ratio of nickel element, cobalt element, manganese element and aluminum element is (89-91):(6.8-7.1):(1.8-2.1): 1.

9. The method for preparing a quaternary positive electrode material of claim 8, wherein the calcining treatment is performed at a temperature of 650-800°C for 7-9h.

10. The method for preparing a quaternary positive electrode material of claim 8 or 9, wherein the calcining treatment is performed in an atmosphere containing oxygen.

11. A quaternary positive electrode material, wherein the quaternary positive electrode material is obtained by the method for preparing a quaternary positive electrode material according to any one of claims 1 to 10.

12. A positive electrode for lithium batteries, comprising the quaternary positive electrode material of claim 11.

13. A lithium battery, comprising the positive electrode for lithium batteries of claim 12.
